# EUROPÄISCHE PATENTSCHRIFT

(11) **EP 0 942 237 B1**
(45) Veröffentlichungstag und Bekanntmachung des Hinweises auf die Patenterteilung: **20.08.2003**
(21) Anmeldenummer: 99104624.4
(22) Anmeldetag: 09.03.1999
(51) Int. Cl.: F24D 3/02, F24F 12/00

(54) **Lüftungs-Heizvorrichtung**
Ventilating and heating installation
Installation de ventilation et de chauffage

(30) Priorität: 10.03.1998 DE 19810357
(43) Veröffentlichungstag der Anmeldung: 15.09.1999
(73) Patentinhaber: Olsberg Hermann Everken GmbH, 59939 Olsberg (DE)
(72) Erfinder: Mantel, Klaus, 59955 Winterberg (DE)
(74) Vertreter: Manitz, Finsterwald & Partner

(56) Entgegenhaltungen:
- DE-A- 19 539 811
- DE-A- 19 734 955
- DE-U- 29 720 577
- DE-U- 29 722 808
- US-A- 5 024 263
- US-A- 5 855 320

## Beschreibung

Die Erfindung betrifft eine Lüftungs-Heizvorrichtung zur Lüftung und Heizung eines geschlossenen Raumes.

Aus der deutschen Offenlegungsschrift DE 19 12 697 ist eine Vorrichtung bekannt, welche es ermöglicht, mit einem einheitlichen Gerät sowohl die Heizung als auch die Lüftung eines geschlossenen Raums sicherzustellen. Dabei wird von außen angesaugte Frischluft (Außenluft) gemeinsam mit Raumluft (Abluft) durch einen elektrisch aufgeheizten Speicherkern geführt und anschließend in den zu lüftenden und zu beheizenden Raum geleitet.

Von Nachteil an diesem Gerät ist die Tatsache, daß die dem Speicherkern zugeführte Außenluft für eine in unerwünschtem Maße stattfindende Abkühlung des Speicherkerns sorgt und daß das Gerät nur in dezentralen, elektrisch betriebenen Heizsystemen zum Einsatz kommen kann.

Die DE 195 39 811 A1 beschreibt eine Zwischenbodenheizung mit Wärmerückgewinnung, wobei zur Erzielung einer kompakten Bauweise der Einsatz von Radialventilatoren vorgeschlagen wird.

Aus der US 5,855,320 ist die Kombination eines Wärmetauschers mit einer Heizeinheit bekannt, die innerhalb eines gemeinsamen Gehäuses angeordnet sind, wobei mittels eines einzigen Gebläses Frischluft durch den Wärmetauscher teilweise zu der Heizeinheit und Raumluft teilweise durch den Wärmetauscher nach außen geführt werden.

Aus der DE 197 34 955 A1 ist die Ergänzung eines Standard-Heizkörpers durch ein Wärmerückgewinnungsgerät mit Außenluftansaugung und Fortluftabfuhr bekannt, wobei der Standard-Heizkörper die bereits durch Wärmetausch vorgeheizte Außenluft nacherwärmt. Zu diesem Zweck wird das Wärmerückgewinnungsgerät seitlich mit einer Seite des Heizkörpers zusammengesetzt und verflanscht.

Eine Aufgabe der Erfindung besteht darin, eine Lüftungs-Heizvorrichtung derart auszubilden, daß eine einfache Montage und Wartung ermöglicht wird.

Diese Aufgabe wird erfindungsgemäß durch die Merkmale des Anspruchs 1 gelöst.

Der Heizbereich der erfindungsgemäßen Lüftungs-Heizvorrichtung als ein Heizregister ausgebildet, welches mittels eines strömenden Fluids, insbesondere mit Warmwasser erwärmbar ist, wobei das Fluid von einer von der Vorrichtung räumlich entfernten, insbesondere zentralen Wärmequelle, beispielsweise einem Gas- oder Ölheizkessel geliefert werden kann. Die erfindungsgemäße Lüftungs-Heizvorrichtung kann somit problemlos an ein zentrales Heizsystem angeschlossen werden, indem die das strömende Fluid führenden Kanäle der Lüftungs-Heizvorrichtung mit dem genannten, insbesondere zentralen Versorgungssystem verbunden werden.

Bezüglich der einzelnen Luftströme wird im Nachstehenden die folgende Terminologie verwendet:
Die dem Wärmetauscher zugeführte und aus dem zu lüftenden Raum abgesaugte Raumluft wird als Abluft bezeichnet; die vom Wärmetauscher wegströmende und in die Atmosphäre abgegebene Raumluft wird als Fortluft bezeichnet; die aus der Atmosphäre angesaugte und dem Wärmetauscher zugeführte Frischluft wird als Außenluft bezeichnet; die vom Wärmetauscher wegströmende und dem Raum zugeführte Frischluft wird als Zuluft bezeichnet. Die aus dem Raum aufgenommene und an den Raum wieder abgegebene Raumluft wird als Umluft bezeichnet.

Durch den erfindungsgemäß vorgesehenen Wärmetauscher, welcher Wärme aus der in die Atmosphäre abgeführten Ab- bzw. Fortluft auf die dem zu be- und entlüftenden sowie zu beheizenden Raum zugeführte Zuluft überträgt und der dem Heizregisterbereich vorgeschaltet ist, wird erreicht, daß die über das Heizregister strömende Zuluft durch den Wärmetauscher bereits vorerwärmt ist, so daß eine in nachteiligem Maße stattfindende Abkühlung des Heizregisters vermieden wird.

Jede einzelne erfindungsgemäße Lüftungs-Heizvorrichtung kann über ihr jeweils zugeordnete Frischluftzufuhr- und Raumluftabfuhrkanäle mit der Atmosphäre verbunden sein. Somit ist es erfindungsgemäß möglich, mit einem einzigen Gerät sowohl eine zentrale Heizung als auch gleichzeitig eine dezentrale Be- und Entlüftung sicherzustellen, so daß bezüglich Heizung und auch bezüglich Lüftung ein höchstmöglicher Komfort erreichbar ist.

Für den Anschluß einer erfindungsgemäßen Lüftungs-Heizvorrichtung ist es lediglich nötig, diese mit dem zentralen Heizsystem zu verbinden, Wanddurchbrüche für Frischluftzufuhr- und Raumluftabfuhrkanal vorzusehen und eine elektrische Stromversorgung für die Ventilationsmittel bereitzustellen. Auch ein Nachrüsten oder ein Austauschen von alten Heizkörpern ist somit auf einfachste Weise bewerkstelligbar, da das Heizregister an ohnehin vorhandene Zentralheizungsversorgungsleitungen angeschlossen werden kann und zusätzlich lediglich die genannten Mauerdurchbrüche und die Stromversorgung bereitgestellt werden müssen.

Indem das Heizregister als separate Baueinheit ausgebildet ist, kann das erläuterte Nachrüsten oder Austauschen auf besonders einfache Weise erfolgen. Die separate Ausgestaltung des Heizregisters ermöglicht einen modularen Aufbau der Vorrichtung. Dies vereinfacht die Wartung und eventuelle Reparaturen. Für das Heizregister der erfindungsgemäßen Vorrichtung kann auf handelsübliche Heizkörper bekannten Aufbaus zurückgegriffen werden.

Bevorzugt ist es, wenn das Heizregister als Radiator oder Konvektor ausgebildet ist, insbesondere als wasserführender Heizkörper oder Plattenheizkörper. Auch die Ausbildung des Heizregisters als Gebläsekonvektor, welchem die zu erwärmende Luft aktiv mittels eines Ventilationsmittels zugeführt wird, ist denkbar.

Bevorzugt ist es, wenn das Heizregister ein oder mehrere Heizelemente aufweist. Beispielsweise können mehrere flächige Heizelemente oder ein Plattenheizkörper mit mehreren Lagen sowie dazwischenliegenden Wärmeleitlamellen dergestalt angeordnet sein, daß die Zuluft durch diese Anordnung hindurch und im wesentlichen parallel zu den mehreren Heizelementflächen geführt wird. Eine derartige Anordnung von mehreren flächigen Heizelementen ist in der Ebene senkrecht zur Strömungsrichtung der Zuluft vorzugsweise geschlossen, so daß die Zuluft nicht seitlich ausweichen kann. Bei einem solchen Durchströmen der Heizelemente ergibt sich - im Unterschied zu einem bloßen Hinterströmen von Heizelementen - eine besonders effiziente Wärmeübertragung.

Alternativ hierzu kann bei der Vorsehung mehrerer Heizelemente ein erstes Heizelement zur Erhitzung der im Wärmetauscher vorerwärmten Zuluft dienen, während ein zweites, vorzugsweise leistungsstärkeres Heizelement zur Erhitzung von diesem direkt zugeführter Raumluft vorgesehen sein kann. Dabei ist es von Vorteil, wenn im Bereich der Luftführung des zweiten Heizelements ggf. ein eigenes Ventilationsmittel vorgesehen ist, so daß die Gesamtanordnung neben dem Frischluft-Ventilationsmittel und dem Raumluft-Ventilationsmittel noch ein drittes Ventilationsmittel besitzt. Da zur Erzielung einer ausreichenden Heizleistung in der Regel der zu erhitzende Raumluft-Volumenstrom größer sein muß als der zu erhitzende Zuluft-Volumenstrom, kann es sinnvoll sein, das zweite Heizelement größer bzw. leistungsstärker auszuführen als das erste Heizelement.

Es ist auch möglich, lediglich ein einziges Heizelement vorzusehen, über welches sowohl die zu erhitzende Zuluft als auch die zu erhitzende Raumluft geführt wird.

Außerdem kann ein elektrisches Zusatzheizregister vorgesehen sein, um bei kurzzeitigem zusätzlichen Heizbedarf eine Schnellaufheizung der im Wärmetauscher vorerwärmten Zuluft zu ermöglichen. Das Zusatzheizregister kann in das Frischluft-Ventilationsmittel integiert oder diesem bezüglich der Strömungsrichtung der Zuluft nachgeschaltet sein.

Eine besonders geringe Bautiefe der Lüftungs-Heizvorrichtung wird erreicht, wenn zumindest die Abluft und die Zuluft, vorzugsweise alle durch den Wärmetauscher und das Heizregister verlaufenden Luftströme, innerhalb einer gemeinsamen Ebene begrenzter Tiefe und ohne bezüglich dieser Ebene orthogonale Richtungskomponenten geführt sind, wobei diese Ebene vorzugsweise parallel zu einer Vorderwand oder Rückwand der Lüftungs-Heizvorrichtung verläuft. In diesem Fall trägt die Anordnung vorgesehener Radial-Ventilatoren innerhalb der genannten Ebene ebenfalls zu einer vorteilhaft geringen Einbautiefe der Vorrichtung bei.

Die erfindungsgemäße Lüftungs-Heizvorrichtung kann in einem einheitlichen, vorzugsweise im wesentlichen quaderförmigen Gehäuse untergebracht werden, wodurch ein ansprechendes Design der Gesamtvorrichtung geschaffen werden kann.

Die raumseitige Abluft-Abfuhröffnung ist vorzugsweise im unteren Gehäusebereich vorgesehen, so daß bevorzugt kühlere Raumluft abgeführt wird. Der raumseitige Heizluft-Austrittsbereich ist bevorzugt im oberen Gehäusebereich angeordnet. Außerdem kann im unteren Gehäusebereich eine raumseitige Umluft-Eintrittsöfftung vorgesehen sein, um mit Hilfe eines Ventilationsmittels oder durch Konvektion Raumluft direkt in den Heizregisterbereich aufnehmen zu können.

Um die Effizienz der Heizfunktion der Vorrichtung zu erhöhen, kann die Gehäusevorderwand an ihre Innenseite eine die Absorption von Wärmestrahlung erhöhende Schicht, insbesondere eine dunkle Lackierung, aufweisen. Außerdem kann die Innenseite der Gehäuserückwand eine die Reflexion von Wärmestrahlung erhöhende Schicht besitzen.

Die Montage und Wartung der erfindungsgemäßen Lüftungs-Heizvorrichtung vereinfachen sich dadurch, daß als separate Baueinheit ausgebildete Heizregister an einer Rückwand der Vorrichtung befestigt wird bzw. ist, und daß bei derart befestigtem Heizregister zumindest die Gehäusevorderwand von der restlichen Vorrichtung gelöst werden kann, ohne daß hierfür auch das Heizregister gelöst werden muß. Das Heizregister und die Gehäusevorderwand bilden also bevorzugt voneinander unabhängig montierbare Einheiten.

Weiterhin ist es von Vorteil, wenn variable Beabstandungsmittel vorgesehen sind, durch welche bei unterschiedlicher Tiefe des Heizregisters die Gehäusevorderwand stets in geringem Abstand oder in thermischem Kontakt zum Heizregister an der restlichen Lüftungs-Heizvorrichtung befestigt werden kann. Als ein derartig geringer Abstand sind beispielsweise Werte zwischen 0 und 15 mm, insbesondere von ca. 2 mm anzusehen. Dadurch ergibt sich eine vorteilhafte Flexibilität im Einsatz und Einbau der Vorrichtung, bei gleichzeitig hoher Effizienz hinsichtlich der Heizfunktion.

Beispielsweise ist es möglich, die Gehäusetiefe der Vorrichtung für einen höchstens dreilagigen Plattenheizkörper vorzusehen. In diesem Fall kann die Vorrichtung ohne weiteres an einen zweilagigen Plattenheizkörper angepaßt werden, indem mit Hilfe der variablen Beabstandungsmittel der Abstand zwischen dem Plattenheizkörper und der Gehäuserückwand derart eingestellt wird, daß die Gehäusevorderwand gerade an der vorderen Lage des Plattenheizkörpers anliegt.

Die Heizleistung des Heizregisters kann beispielsweise mittels geeigneter Steuer- und Regelelemente, insbesondere mittels eines Thermostatventils steuer- oder regelbar sein. Durch die Vorsehung eines solchen Thermostatventils kann der Nutzer der erfindungsgemäßen Vorrichtung genauso wie bei üblichen Zentralheizungssystemen eine individuelle Einzelraumregelung vornehmen, was die nutzerseitige Akzeptanz des erfindungsgemäßen Systems deutlich erhöht.

Der Volumenstrom im Frischluftzufuhrkanal und/oder im Raumluftabfuhrkanal kann mittels wahlweise veränderlicher Leistung des jeweiligen Ventilationsmittels einstellbar sein. Zu diesem Zweck kann die erfindungsgemäße Vorrichtung in ihrem Bedienbereich beispielsweise zumindest einen Zwei- oder Dreistufenschalter aufweisen, mit dem unterschiedliche Ventilatordrehzahlen gewählt werden können. Durch diese Wahlmöglichkeit ist der Grad der gewünschten Lüftung einstellbar. Alternativ oder zusätzlich kann dies auch dadurch erreicht werden, daß der Volumenstrom im Frischluftzufuhrkanal und/oder im Raumluftabfuhrkanal mittels wahlweise beweglicher Lüftungsklappen geregelt wird.

Zur Bewerkstelligung einer automatischen Regelung ist es sinnvoll, wenn im Bereich der Vorrichtung ein interner oder externer Raumtemperaturfühler vorgesehen wird. Zudem kann im Bereich des Frischluftzufuhrkanals in Strömungsrichtung nach dem Wärmetauscher ein weiterer Temperaturfühler vorgesehen sein, welcher die Temperatur der durch den Wärmetauscher erhitzten Zuluft feststellt. Aufgrund dieser Information kann dann entschieden werden, in welchem Maße es nötig ist, die vorerwärmte Zuluft noch über das Heizregister zu führen bzw. inwieweit die vorerwärmte Zuluft direkt dem zu beheizenden und zu lüftenden Raum zugeführt werden kann.

Von Vorteil ist es, wenn die Heiz- und/oder Lüftungsleistung mittels geeigneter Stellmittel für das durchströmende Fluid, Ventilationsmittel-Leistung und/oder Lüftungsklappenstellung in Abhängigkeit von eingestellten Sollwerten, der Raumtemperatur, der Temperatur der im Wärmetauscher erwärmten Frischluft, der Außentemperatur, der Raumluftfeuchte, der Außenluftfeuchte und/oder der Tages- bzw. Nachtzeit steuer- bzw. regelbar ist.

Zum Schutz des Wärmetauschers kann im Bereich des Frischluftkanals in Strömungsrichtung vor dem Wärmetauscher ein Feinstaub- und/oder Pollenfilter vorgesehen sein.
Zu einem entsprechenden Zweck kann ein Abluftfilter im Raumluftabfuhrkanal dem Wärmetauscher vorgeschaltet sein.

Von Vorteil ist es, wenn eine Luftklappensteuerung vorgesehen wird, welche bei Bedarf dafür sorgt, daß die durch den Wärmetauscher gelangte Außen- bzw. Zuluft direkt dem zu beheizenden bzw. zu lüftenden Raum zuführbar ist. Eine solche direkte Außen- bzw. Zuluft-Zuführung kann dann sinnvoll sein, wenn beispielsweise nur eine geringe oder keine Heizleistung benötigt wird (Sommerbetrieb). Die Lüftungsklappensteuerung kann dabei vorzugsweise auch so eingestellt werden, daß ein Teil der zugeführten Zuluft über das Heizregister und ein Teil direkt in den Raum gelangt.

Die Erfindung wird nachfolgend beispielhaft anhand der beiden Figuren beschrieben, welche jeweils ein Prinzipschaubild einer bevorzugten Ausführungsform einer erfindungsgemäßen Lüftungs-Heizvorrichtung zeigen.

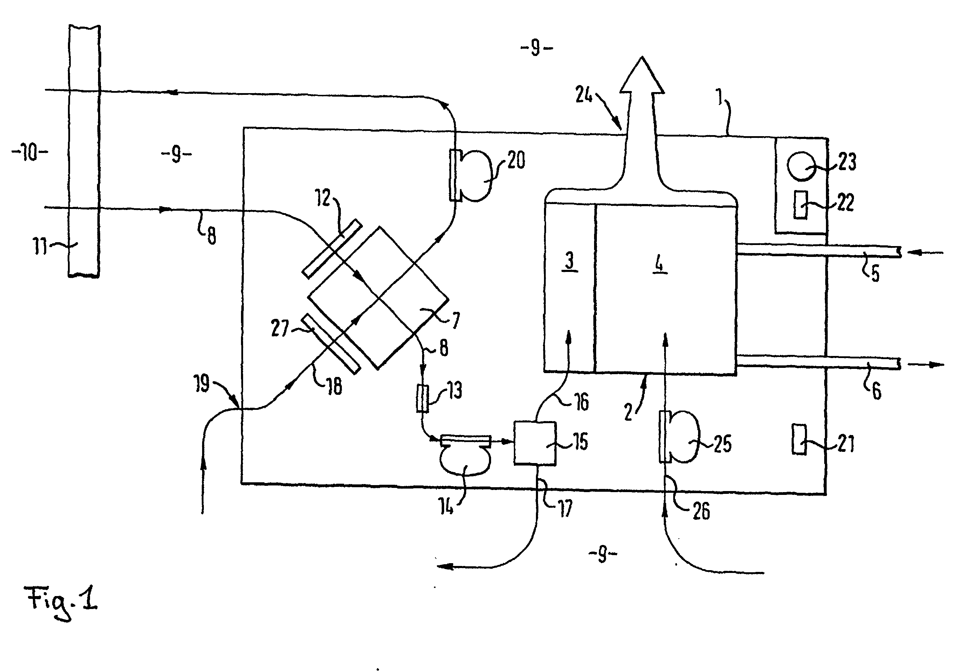

Die in Fig. 1 dargestellte erfindungsgemäße Lüftungs-Heizvorrichtung ist in einem einheitlichen Gehäuse 1 untergebracht, welches lediglich schematisch in einer aufgeschnittenen Frontansicht dargestellt ist.

Im Gehäuse 1 befindet sich ein zweigeteiltes Heizregister 2, welches aus einem leistungsschwächeren ersten Heizelement 3 und einem leistungsstärkeren zweiten Heizelement 4 besteht. Das Heizregister 2 mit den beiden Heizelementen 3, 4 ist an eine zentrale Warmwasserversorgung zur Aufheizung des Heizregisters 2 angeschlossen. Die Warmwasserzuführleitung ist in der Figur mit 5, die Warmwasserabführleitung mit 6 bezeichnet.

Weiterhin ist im Gehäuse 1 ein Wärmetauscher 7, der vorzugsweise als Platten-Wärmetauscher ausgebildet ist, angeordnet. Im Sommerbetrieb kann der Wärmetauscher 7 gegen eine Sommerkassette austauschbar sein, die lediglich für eine korrekte Luftführung ohne Wärmetauscherfunktion sorgt.

Ein Frischluftzufuhrkanal 8 führt von der außerhalb eines Raumes 9 gelegenen Atmosphäre 10 durch eine Hauswand 11 in das Gehäuse 1 und dort durch ein Feinstaub- und/oder Pollenfilter 12 in den Wärmetauscher 7. Vom Wärmetauscher 7 führt der Frischluftzufuhrkanal 8 durch einen Temperatursensor 13 zu einem Frischluft-Ventilationsmittel 14 und von dort zu einer Lüftungsklappensteuerung 15. Durch die Lüftungsklappen-Steuerung 15 kann die durch den Frischluftzufuhrkanal 8 zugeführte Außen- bzw. Zuluft entlang des Kanals 16 zum kleineren Heizelement 3 und/oder in einen zu lüftenden und/oder zu beheizenden Innenraum 9 entlang des Kanals 17 geleitet werden.

Ein Raumluft-Abfuhrkanal 18, welcher raumseitig in eine Abluft-Abführöffnung 19 mündet, führt von dort über ein Abluftfilter 27, den Wärmetauscher 7 und ein Raumluft-Ventilationsmittel 20 durch die Hauswand 11 in die Atmosphäre 10.

Weiterhin sind im Gehäuse 1 ein Raumtemperaturfühler 21, ein Ventilationsmittel-Steuerschalter 22 sowie ein Thermostatventil 23 angeordnet.

Die im Heizregister 2 durch die Heizelemente 3, 4 erwärmte Luft gelangt über einen im Gehäuse 1, insbesondere auf seiner Oberseite vorgesehenen Heizluft-Austrittsbereich 24 in den zu lüftenden bzw. zu beheizenden Raum 9.

Weiterhin ist ein zusätzliches Ventilationsmittel 25 vorgesehen, mittels welchem Raumluft entlang eines Kanals 26 angesaugt wird, die dann über das große Heizelement 4 zum Heizluft-Austrittsbereich 24 gefördert wird. Über diesen Kanal 26 ist somit ein wesentlicher Teil der Heizleistung der Gesamtvorrichtung erzeugbar. Das Ventilationsmittel 25 ist jedoch bevorzugt separat steuerbar, so daß bei geringem oder keinem Heizbedarf hier eine Abschaltung erfolgen kann. In diesem Fall erfüllt die Vorrichtung dann neben einer Lüftungsfunktion lediglich eine geringe Heizfunktion über das kleine Heizelement 3 oder keine Heizfunktion, wenn die angesaugte Außen- bzw. Zuluft direkt über den Kanal 17 in den Raum 9 gefördert wird.

Beim Betrieb der dargestellten Lüftungs-Heizvorrichtung wird mittels des Frischluft-Ventilationsmittels 14 Außenluft aus der Atmosphäre 10 angesaugt, welche durch das Filter 12 in den Wärmetauscher 7 gelangt. In entsprechender Weise wird über die Abluft-Abführöffnung 19 warme Abluft mittels des Raumluft-Ventilationsmittels 20 angesaugt, die auf diese Weise ebenfalls in den Wärmetauscher 7 gelangt. Im Wärmetauscher 7 wird Wärme von der angesaugten Abluft auf die angesaugte Außenluft übertragen, so daß eine Wärmerückgewinnung aus der Abluft stattfindet, mit der die angesaugte Außenluft erwärmt wird.

Mittels des im Bereich des Frischluftkanals 8 dem Wärmetauscher 7 nachgeschalteten Temperaturfühlers 13 kann ermittelt werden, ob und ggf. wie stark die im Wäremtauscher erwärmte Zuluft mittels des Heizelements 3 nacherwärmt werden muß.

In Abhängigkeit von der im Temperaturfühler 13 ermittelten Temperatur, von der durch den Raumtemperaturfühler 21 ermittelten Raumtemperatur, von den mittels des Thermostatventils 23 eingestellten Werten sowie von der Stellung des Ventilationsmittel-Schalters 22 wird dann die Heizund/oder Lüftungsleistung des dargestellten Geräts gesteuert bzw. geregelt. Diese Steuerung bzw. Regelung erfolgt dabei beispielsweise durch eine Anpassung der Leistung der Ventilationsmittel 14, 20, 25, mittels einer Änderung des Warmwasserdurchflusses in den Leitungen 5, 6 und/oder mittels der Lüftungsklappensteuerung 15.

Die Lüftungsklappensteuerung 15 kann dafür sorgen, daß bei Bedarf beispielsweise die gesamte angesaugte Außen- bzw. Zuluft über den Kanal 17 direkt in den Raum 9 gefördert wird, ohne daß eine Nacherwärmung durch das Heizelement 3 erfolgt. Ebenso kann jedoch auch die gesamte angesaugte Außen- bzw. Zuluft über den Kanal 16 in den Bereich des Heizelements 3 gefördert werden, wo dann eine Nacherwärmung stattfindet. Zudem ist es auch möglich, daß die Lüftungsklappensteuerung 15 eine Aufteilung des Zuluftstroms in zwei Teilströme bewirkt, die dann über die Kanäle 16, 17 strömen.

Unter anderem kann die in Fig. 1 dargestellte Vorrichtung in folgenden Betriebsarten betrieben werden:

Bei gleichzeitigem Betrieb der Ventilationsmittel 14 und 20 findet eine Beund Entlüftung des Raumes unter gleichzeitiger Wärmerückgewinnung statt. Wenn die Ventilationsmittel 14 und 20 ausgeschaltet sind, findet keine Lüftung des Raumes statt, wobei in diesem Fall jedoch durch den Betrieb des Ventilationsmittels 25 ein Aufheizen der Raumluft erfolgen kann.
Falls gewünscht wird, daß ausschließlich Zuluft zugeführt, jedoch keine Abluft abgeführt wird, kann das Ventilationsmittel 14 ein- und das Ventilationsmittel 20 ausgeschaltet werden. Falls in umgekehrter Weise nur ein Abführen von Abluft, jedoch kein Zuführen von Zuluft gewünscht wird, kann das Ventilationsmittel 20 ein- und das Ventilationsmittel 14 ausgeschaltet werden. Andere Kombinationen von Betriebsarten der Ventilationsmittel sind ebenfalls realisierbar.

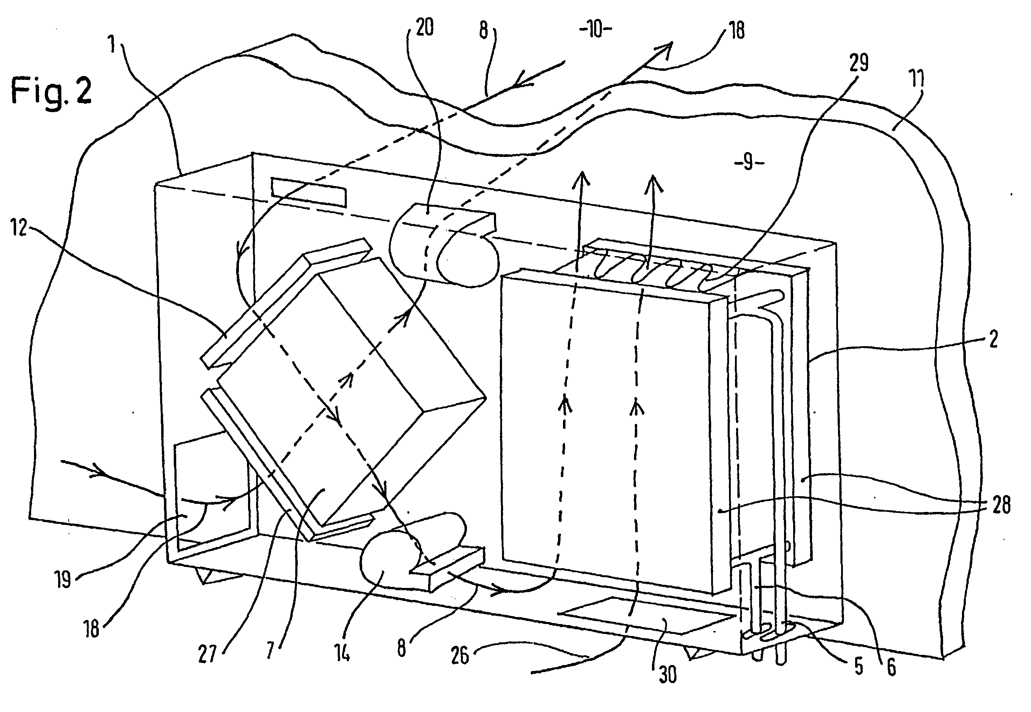

Fig. 2 zeigt in einer schematischen Perspektivansicht eine weitere Ausführungsform der erfindungsgemäßen Lüftung-Heizvorrichtung, wobei gleiche oder gleichartige Elemente wie in Fig. 1 mit denselben Bezugszeichen gekennzeichnet sind. Insbesondere ist ein Frischluftzufuhrkanal 8 gezeigt, der von der Atmosphäre 10 durch eine Hauswand 11 in ein Gehäuse 1 und dort durch einen Wärmetauscher 7, einen nachgeschalteten Frischluft-Ventilator 14 und ein Heizregister 2 in den Raum 9 verläuft. Außerdem durchquert ein Raumluft-Abfuhrkanal 18 den Wärmetauscher 7 sowie einen Raumluft-Ventilator 20 und schließlich die Wand 11.

Der besseren Übersicht halber ist das Gehäuse 1 ohne Vorderwand, Dekkel und rechte Seitenwand gezeigt. Die Unterseite des Gehäuses 1 weist im Bereich des Heizregisters 2 eine Umluft-Eintrittsöffnung 30 auf, durch welche Luft aus dem Raum 9 in das Gehäuse 1 eintreten und durch Konvektion entlang eines Umluftkanals 26 zum Heizregister 2 gelangen kann. Im Bereich des Heizregisters 2 entspricht der Umluftkanal 26 dem Frischluftzufuhrkanal 8.

Das Heizregister 2 ist als ein separater Plattenheizkörper gebildet mit zwei Plattenlagen 28 sowie mit zwischen den Lagen 28 angeordneten Wärmeleitlamellen 29. Die Plattenlagen 28 und die Lamellen 29 erstrecken sich flächig parallel zum Frischluftzufuhrkanal 8 bzw. zum Umluftkanal 26, so daß die Kanäle 8, 26 in mehrere aneinander grenzende Bereiche jeweils geschlossenen Umfangs unterteilt sind. Nach Passieren des Heizregisters 2 kann die erwärmte Zuluft bzw. Umluft das Gehäuse 1 durch eine Heizluft-Austrittsöffnung am Deckel des Gehäuses 1 verlassen und in den Raum 9 eintreten.

Der Plattenheizkörper 2 wird über eine Vorlaufleitung 5 mit Warmwasser einer zentralen Wärmequelle versorgt, welches nach Durchlaufen des Plattenheizkörpers 2 über eine Rücklaufleitung 6 wieder zu der Wärmequelle rückgeführt wird. Die beiden Leitungen 5, 6 verlassen das Gehäuse 1 durch Langlochöffnungen an der Gehäuseunterseite.

Somit dient die in Fig. 2 gezeigte Vorrichtung zum einen zur Erwärmung des Raums 9 mittels eines an zentraler Stelle erwärmten Fluids, das durch einen handelsüblichen Plattenheizkörper 2 geführt ist. Zum anderen sorgt die Vorrichtung durch direkten Anschluß an die Atmosphäre 10 für eine dezentrale Be- und Entlüftung des Raums 9. Unter anderem sind hierfür folgende Betriebsarten möglich:
1. Beide Ventilatoren 14, 20 sind ausgeschaltet. In diesem Fall wird nur durch natürliche Umluft-Konvektion geheizt.
2. Der Frischluft-Ventilator 14 ist in Betrieb, d. h. es wird lediglich Zuluft in den Raum 9 eingeführt.
3. Beide Ventilatoren 14, 20 sind in Betrieb. In diesem Fall wird Frischluft zugeführt und Abluft abgeführt.

Bei den beiden Betriebsarten 2. und 3. können jeweils verschiedene Lüfterstufen der Ventilatoren 14, 20 eingestellt werden, und der Plattenheizkörper 2 kann in unterschiedlichem Maße betrieben werden.

Die Gehäusetiefe der dargestellten Lüftungs-Heizvorrichtung ist für dreilagige Plattenheizkörper ausgelegt. Gleichzeitig ist vorgesehen, daß die in Fig. 2 nicht gezeigte Gehäusevorderwand nach ihrer Montage flächig an der vorderen Lage 28 des Plattenheizkörpers 2 anliegt. Zu diesem Zweck sind zwischen der hinteren Lage 28 des Plattenheizkörpers 2 und der Gehäuserückwand variable Beabstandungsmittel in Form von Schraubelementen und zugehörigen Abstandshülsen unterschiedlicher Länge vorgesehen. Mit Hilfe dieser Beabstandungsmittel kann der Abstand zwischen der hinteren Lage 28 und der Gehäuserückwand derart eingestellt werden, daß die Gehäusevorderwand auf Höhe der vorderen Lage 28 verläuft. Die Vorrichtung ist somit bei Vorsehung eines einzigen Gehäuses leicht an ein-, zwei- und dreilagige Heizregister anzupassen, wobei eine hohe Effizienz in der raumseitigen Wärmeübertragung- und abstrahlung gewährleistet ist.

Da bei einer derartigen Montage der Plattenheizkörper 2 und die Gehäuserückwand aneinander befestigt sind, kann die Gehäusevorderwand - wie dargestellt - für Wartungsarbeiten ohne weiteres abgenommen werden.

Die Vorrichtung gemäß Fig. 2 besitzt nicht dargestellte Steuer- und Regelmittel, beispielsweise Thermostatventile und Temperaturfühler, zur Steuerung und Regelung der erläuterten Betriebsarten, wie im Zusammenhang mit Fig. 1 beschrieben.

Ferner kann die Lüftungs-Heizvorrichtung ein dem Plattenheizkörper 2 nachgeschaltetes elektrisches Zusatzheizregister für eine optionale Schnellaufheizung des Raumes 9 aufweisen.

Im Gegensatz zu der Vorrichtung gemäß Fig. 1 besitzt die in Fig. 2 gezeigte Lüftungs-Heizvorrichtung keine Lüftungsklappensteuerung 15, d. h. die Zuluft wird immer entlang des Frischluftzufuhrkanals 8 über den Plattenheizkörper 2 geführt. Außerdem ist am Umluftkanal 26 kein eigenes Ventilationsmittel vorgesehen.

Indem bei der Vorrichtung gemäß Fig. 2 alle Luftströme - mit Ausnahme der durch die Wand 11 geführten Außenluft und Fortluft - parallel zur Rückwand des Gehäuses 1 und diesbezüglich ohne seitliche Umlenkungen geführt werden, erfolgt die gesamte Konvektion in der Ventilatorebene, und es wird eine vorteilhaft geringe Bautiefe erreicht.

## Patentansprüche

1. Lüftungs-Heizvorrichtung zur Lüftung und Heizung eines geschlossenen Raums (9), mit
- einem Heizregister (2),
- einem Frischluftzufuhrkanal (8), dem ein Frischluft-Ventilationsmittel (14) zugeordnet ist und der in einen Heizregisterbereich mündet,
- einem dem Heizregisterbereich nachgeschalteten raumseitigen Heizluft-Austrittsbereich (24),
- einem Raumluftabfuhrkanal (18), dem ein Raumluft-Ventilationsmittel (20) zugeordnet ist und der in eine raumseitige Abluft-Abführöffnung (19) mündet, und
- einem Wärmetauscher (7), durch den der Frischluftzufuhrkanal: (8) und der Raumluftabfuhrkanal (18) geführt sind zur Übertragung von Wärme vom Raumluftabfuhrkanal (18) zum Frischluftzufuhrkanal (8),
wobei für eine zentrale Heizung des Raums (9) das Heizregister (2) an eine zentrale Wärmequelle anschließbar und mittels eines strömenden Fluids erwärmbar ist,
wobei für eine dezentrale Lüftung des Raums (9) der Frischluftzufuhrkanal (8) und der Raumluftabfuhrkanal (18) an die an den Raum (9) angrenzende Atmosphäre (10) anschließbar sind, und
wobei das Heizregister (2) und der Wärmetauscher (7) in einem einheitlichen Gehäuse (1) angeordnet sind,
**dadurch gekennzeichnet,**
**daß** das Heizregister (2) als eine separate Baueinheit zur Befestigung an einer Rückwand des Gehäuses (1) vorgesehen ist, und daß bei montierter Lüftungs-Heizvorrichtung eine Gehäusevorderwand abnehmbar ist, ohne daß hierfür eine Demontage des Heizregisters (2) von der restlichen Lüftungs-Heizvorrichtung erforderlich ist.

2. Lüftungs-Heizvorrichtung nach Anspruch 1,
**dadurch gekennzeichnet,**
**daß** das Heizregister (2) als Radiator, Konvektor, Gebläsekonvektor, Plattenheizkörper mit einer oder mehreren Lagen (28), und/oder wasserführend ausgebildet ist, und/oder
**daß** das Heizregister (2) ein oder mehrere Heizelemente (3, 4) aufweist.

3. Lüftungs-Heizvorrichtung nach Anspruch 2,
**dadurch gekennzeichnet,**
**daß** ein erstes Heizelement (3) zur Erhitzung der im Wärmetauscher (7) vorerwärmten Zuluft und ein zweites, insbesondere leistungsstärkeres Heizelement (4) zur Erhitzung von diesem direkt zugeführter Raumluft vorgesehen ist, wobei vorzugsweise ein eigenes Ventilationsmittel (25) im Bereich der Luftführung (26) des zweiten Heizelements (4) vorgesehen ist, und/oder
**daß** mehrere Heizelemente des Heizregisters dergestalt zueinander benachbart angeordnet sind, daß die Heizelemente von der in den Heizregisterbereich gelangenden Luft durchströmbar sind, und/oder
**daß** ein mehrere Lagen (28) aufweisender Plattenheizkörper (2) dergestalt angeordnet ist, daß die Lagen (28) von der in den Heizregisterbereich gelangenden Luft durchströmbar sind.

4. Lüftungs-Heizvorrichtung nach einem der vorhergehenden Ansprüche,
**dadurch gekennzeichnet,**
**daß** ein elektrisches Zusatzheizregister vorgesehen ist, das in das Frischluft-Ventilationsmittel (14) integriert ist oder das bezüglich der Strömungsrichtung des Frischluftzufuhrkanals (8) dem Frischluft-Ventilationsmittel (14) und/oder dem Heizregister (2) nachgeschaltet ist, und/oder
**daß** die Luftführung innerhalb der Lüftungs-Heizvorrichtung in einer gemeinsamen Ebene, insbesondere in Richtungen parallel zu einer Vorderwand der Lüftungs-Heizvorrichtung, vorgesehen ist.

5. Lüftungs-Heizvorrichtung nach einem der vorhergehenden Ansprüche,
**dadurch gekennzeichnet,**
**daß** das Gehäuse (1) im wesentlichen quaderförmig ist, und/oder daß die raumseitige Abluft-Abführöffnung (19) im unteren Gehäusebereich angeordnet ist, und/oder
**daß** der raumseitige Heizluft-Austrittsbereich (24) im oberen Gehäusebereich angeordnet ist, und/oder
**daß** der untere Gehäusebereich zur Aufnahme von Raumluft in den Heizregisterbereich eine Umluft-Eintrittsöffnung (30) aufweist.

6. Lüftungs-Heizvorrichtung nach Anspruch 5,
**dadurch gekennzeichnet,**
**daß** eine Gehäusevorderwand an ihrer dem Heizregister (2) zugewandten Seite zumindest bereichsweise eine die Absorption von Wärmestrahlung erhöhende Schicht, insbesondere eine dunkle Lackierung, aufweist, und/oder
**daß** eine Gehäuserückwand an ihrer dem Heizregister (2) zugewandten Seite zumindest bereichsweise eine die Reflexion von Wärmestrahlung erhöhende Schicht aufweist.

7. Lüftungs-Heizvorrichtung nach einem der vorhergehenden Ansprüche,
**dadurch gekennzeichnet,**
**daß** variable Beabstandungsmittel vorgesehen sind, durch welche bei unterschiedlicher Tiefe des Heizregisters (2) eine Gehäusevorderwand jeweils in geringem Abstand zum Heizregister (2) oder in thermisch leitender Verbindung zum Heizregister (2) an der restlichen Lüftungs-Heizvorrichtung befestigbar ist, wobei der Abstand insbesondere zwischen 0 und 15 mm, vorzugsweise ca. 2 mm beträgt.

8. Lüftungs-Heizvorrichtung nach einem der vorhergehenden Ansprüche,
**dadurch gekennzeichnet,**
**daß** die Heizleistung des Heizregisters (2) mittels zumindest eines Steuer- und/oder Regelmittels, insbesondere mittels eines Thermostatventils (23) steuer- oder regelbar ist, und/oder
**daß** der Volumenstrom im Frischluftzufuhrkanal (8) und/oder im Raumluftabfuhrkanal (18) mittels wahlweise veränderlicher Leistung des jeweiligen Ventilationsmittels (14, 20) und/oder mittels wahlweise beweglicher Lüftungsklappen (15) einstellbar ist, und/oder daß ein interner oder externer Raumtemperaturfühler (21) vorgesehen ist, und/oder
**daß** ein Temperaturfühler (13) im Bereich des Frischluftzufuhrkanals (8) in Strömungsrichtung nach dem Wärmetauscher (7) vorgesehen ist.

9. Lüftungs-Heizvorrichtung nach einem der vorhergehenden Ansprüche,
**dadurch gekennzeichnet,**
**daß** die Heiz- und/oder Lüftungsleistung mittels Steuer- und/oder Regelmitteln (23) für das durchströmende Fluid, Ventilationsmittel-Leistung und/oder Lüftungsklappenstellung in Abhängigkeit von eingestellten Sollwerten, der Raumtemperatur, der Temperatur der im Wärmetauscher (7) erwärmten Zuluft, der Außentemperatur, der Raumluftfeuchte, der Außenluftfeuchte und/oder der Tages- bzw. Nachtzeit steuer- bzw. regelbar ist.

10. Lüftungs-Heizvorrichtung nach einem der vorhergehenden Ansprüche,
**dadurch gekennzeichnet,**
**daß** die durch den Wärmetauscher (7) gelangte Zuluft mittels einer Lüftungsklappensteuerung (15) direkt dem zu beheizenden bzw. zu lüftenden Raum (9) zuführbar ist, und/oder
**daß** eine für die Zufuhr des Fluids zum Heizregister (2) vorgesehene Vorlaufleitung (5) und eine für die Abfuhr des Fluids vorgesehene Rücklaufleitung (6) zum Austritt aus der Lüftungs-Heizvorrichtung an deren Unterseite vorgesehen sind.

11. Lüftungs-Heizvorrichtung nach einem der vorhergehenden Ansprüche,
**dadurch gekennzeichnet,**
**daß** im Bereich des Frischluftzufuhrkanals (8) in Strömungsrichtung vor dem Wärmetauscher (7) ein Feinstaub- und/oder Pollenfilter (12) vorgesehen ist, und/oder
**daß** im Bereich des Raumluftabfuhrkanals (18) in Strömungsrichtung vor dem Wärmetauscher (7) ein Abluftfilter (27) vorgesehen ist.

## Claims

1. A ventilation/heating apparatus for the ventilation and heating of an enclosed room (9), comprising
- a heating register (2);
- a fresh air infeed passage (8) with which a fresh air ventilation means (14) is associated and which opens into a heating register region;
- a room-side heating air removal region (24) disposed after the heating register region;
- a room air removal passage (18) with which a room air ventilation means (20) is associated and which opens into a room-side waste air removal opening (19); and
- a heat exchanger (7) through which the fresh air infeed passage (8) and the room air removal passage (18) are guided for the transfer of heat from the room air removal passage (18) to the fresh air infeed passage (8),
wherein the heating register (2) can be connected to a central heat source and can be heated by means of a flowing fluid for a central heating of the room (9);
wherein the fresh air infeed passage (8) and the room air removal passage (18) can be connected to the atmosphere (10) adjoining the room (9) for a decentralized ventilation of the room (9); and
wherein the heating register (2) and the heat exchanger (7) are arranged in a uniform housing (1),
**characterised in that** the heating register (2) is provided as a separate component for fastening to a rear wall of the housing (1); and **in that**, when the ventilation/heating apparatus is installed, a housing front wall can be removed without a de-installation of the heating register (2) from the remaining ventilation/heating apparatus being required for this purpose.

2. A ventilation/heating apparatus in accordance with claim 1, **characterised**
**in that** the heating register (2) is formed as a radiator, as a convector, as a fan convector, as a panel-type radiator having one or more layers (28) and/or to carry water; and/or
**in that** the heating register (2) has one or more heating elements (3, 4).

3. A ventilation/heating apparatus in accordance with claim 2, **characterized**
**in that** a first heating element (3) is provided for the heating of the infeed air pre-heated in the heat exchanger (7) and a second heating element (4), in particular a heating element of higher power, is provided for the heating of room air directly supplied to it, with preferably a separate ventilation means (25) being provided in the region of the air guide (26) of the second heating element (4); and/or
**in that** a plurality of heating elements of the heating register are arranged adjacently to one another such that the the air entering into the heating register region can flow through the heating elements; and/or
**in that** a panel-type radiator (2) having a plurality of layers (28) is arranged such that the air entering into the heating register region can flow through the layers (28).

4. A ventilation/heating apparatus in accordance with any one of the previous claims, **characterised**
**in that** an electrical additional heating register is provided which is integrated into the fresh air ventilation means (14) or which is disposed after the fresh air ventilation means (14) and/or after the heating register (2) with respect to the flow direction of the fresh air infeed passage (8); and/or
**in that** the air guide is provided within the ventilation/heating apparatus in a common plane, in particular in directions parallel to a front wall of the ventilation/heating apparatus.

5. A ventilation/heating apparatus in accordance with any one of the previous claims, **characterised**
**in that** the housing (1) is a substantially of right parallelepiped shape; and/or
**in that** the room-side waste air removal opening (19) is preferably arranged in the lower housing region; and/or
**in that** the room-side hot air outlet region (24) is arranged in the upper housing region; and/or
**in that** the lower housing region has a circulating air entrance opening (30) for the reception of room air into the heating register region.

6. A ventilation/heating apparatus in accordance with claim 5, **characterised**
**in that** a housing front wall at least regionally has a layer, in particular a dark lacquer layer, increasing the absorption of heat radiation at its side facing the heating register (2); and/or
**in that** a housing rear wall at least regionally has a layer increasing the reflection of heat radiation at its side facing the heating register (2).

7. A ventilation/heating apparatus in accordance with any one of the previous claims, **characterised**
**in that** variable spacing means are provided by which a housing front wall can be fastened to the remaining ventilation/heating apparatus at a different depth of the heating register (2) in each case at a low spacing from the heating register (2) or in thermally conducting communication with the heating register (2), with the spacing in particular amounting to between 0 and 15 mm, preferably to approximately 2 mm.

8. A ventilation/heating apparatus in accordance with any one of the previous claims, **characterised**
**in that** the heating power of the heating register (2) can be controlled and/or regulated by means of at least one control and/or regulation means, in particular by means of a thermostat valve (23); and/or
**in that** the volume flow in the fresh air infeed passage (8) and/or in the room air removal passage (18) can be set by means of an alternately changeable power of the respective ventilation means (14, 20) and/or by means of alternately movable ventilation flaps (15); and/or in that an internal or an external room temperature sensor (21) is provided; and/or
**in that** a temperature sensor (13) is provided in the region of the fresh air infeed passage (8) after the heat exchanger (7) in the flow direction.

9. A ventilation/heating apparatus in accordance with any one of the previous claims, **characterised**
**in that** the heating and/or ventilation power can be controlled and/or regulated by means of control means and/or regulation means (23) for the fluid flowing through, ventilation means power and/or ventilation flap position in dependence on set desired values, on the room temperature, on the temperature of the infeed air heated in the heat exchanger (7), on the outside temperature, on the room air humidity, on the outside air humidity and/or on the time of day or night.

10. A ventilation/heating apparatus in accordance with any one of the previous claims, **characterised**
**in that** the infeed air entering through the heat exchanger (7) can be supplied directly to the room (9) to be heated or to be ventilated by means of a ventilation flap control (15); and/or
**in that** a lead line (5) provided for the feed of the fluid to the heating register (2) and a return line (6) provided for the removal of the fluid are provided for the outlet from the ventilation/heating apparatus at its lower side.

11. A ventilation/heating apparatus in accordance with any one of the previous claims, **characterised**
**in that** a fine dust filter and/or a pollen filter (12) is/are provided in the region of the fresh air infeed passage (8) in front of the heat exchanger (7) in the flow direction; and/or
**in that** a waste air filter (27) is provided in the region of the room air removal passage (18) in front of the heat exchanger (7) in the flow direction.

## Revendications

1. Installation de ventilation/chauffage pour la ventilation et le chauffage d'un local fermé (9), comprenant :
-- un registre de chauffage (2),
-- un conduit d'amenée d'air frais (8), auquel est associé un dispositif de ventilation d'air frais (14) et qui débouche dans une zone du registre de chauffage,
-- une zone de sortie d'air chaud (24), côté local, disposée en aval de la zone du registre de chauffage,
-- un conduit d'évacuation d'air du local (18), auquel est associé un dispositif de ventilation d'air du local (20) et qui débouche dans une ouverture d'évacuation d'air vicié (19), côté local, et
-- un échangeur de chaleur (7) à travers lequel sont menés le conduit d'amenée d'air frais (8) et le conduit d'évacuation d'air du local (18) pour le transfert de chaleur depuis le conduit d'évacuation d'air du local (18) vers le conduit d'amenée d'air frais (8),
dans laquelle :
pour un chauffage centralisé du local (9), le registre de chauffage (2) peut être raccordé à une source de chaleur centrale et peut être réchauffé au moyen d'un fluide en écoulement,
pour une ventilation décentralisée du local (9), le conduit d'amenée d'air frais (8) et le conduit d'évacuation d'air du local (18) peuvent être raccordés à l'atmosphère (10) limitrophe du local (9), et
le registre de chauffage (2) et l'échangeur de chaleur (7) sont agencés dans un boîtier unitaire (1),
**caractérisée en ce que**
le registre de chauffage (2) est prévu sous forme d'une unité structurelle séparée et destinée à être fixée sur une paroi postérieure du boîtier (1), et **en ce que** lorsque l'installation de ventilation/chauffage est montée, une paroi antérieure du boîtier est susceptible d'être enlevée sans qu'il soit nécessaire de procéder à cet effet à un démontage du registre de chauffage (2) depuis le reste de l'installation de ventilation/chauffage.

2. Installation de ventilation/chauffage selon la revendication 1,
**caractérisée en ce que** le registre de chauffage (2) est réalisé sous forme d'un radiateur, d'un convecteur, d'un ventilo-convecteur, d'un corps de chauffage à plaques présentant une ou plusieurs couches (28), et/ou à circulation d'eau, et/ou **en ce que** le registre de chauffage (2) comprend un ou plusieurs éléments chauffants (3,4).

3. Installation de ventilation/chauffage selon la revendication 2,
**caractérisée en ce que** :
un premier élément chauffant (3) est prévu pour le chauffage de l'air entrant préchauffé dans l'échangeur de chaleur (7), et un second élément chauffant (4), en particulier de plus forte puissance, est prévu pour le chauffage de l'air du local qui lui est admis directement, et il est ici de préférence prévu un propre dispositif de ventilation (25) dans la région du guidage d'air (26) du second élément chauffant (4), et/ou
plusieurs éléments chauffants du registre de chauffage sont agencés au voisinage les uns des autres de telle façon que les éléments chauffants peuvent être traversés par l'air qui parvient dans la région du registre de chauffage, et/ou
un corps de chauffage à plaques (2) qui présente plusieurs couches (28) est agencé de telle manière que les couches (28) peuvent être traversées par l'air qui parvient dans la région du registre de chauffage.

4. Installation de ventilation/chauffage selon l'une des revendications précédentes,
**caractérisée en ce que** :
il est prévu un registre de chauffage additionnel électrique, lequel est intégré dans le dispositif de ventilation d'air frais (14), ou est disposé en aval, par référence à la direction d'écoulement du conduit d'amenée d'air frais (8), du dispositif de ventilation d'air frais (14) et/ou du registre de chauffage (2), et/ou
le guidage d'air à l'intérieur de l'installation de ventilation/chauffage est prévu dans un plan commun, en particulier dans des directions parallèles à une paroi antérieure de l'installation de ventilation/chauffage.

5. Installation de ventilation/chauffage selon l'une des revendications précédentes,
**caractérisée en ce que** :
le boîtier (1) est sensiblement de forme parallélépipédique, et/ou
l'ouverture d'évacuation d'air vicié (19) côté local est agencée dans la zone inférieure du boîtier, et/ou
la zone de sortie d'air chaud (24) côté local est agencée dans la zone inférieure supérieure du boîtier, et/ou
la zone inférieure du boîtier présente une ouverture d'entrée de recirculation d'air (30) pour la reprise d'air du local vers la zone du registre de chauffage.

6. Installation de ventilation/chauffage selon la revendication 5,
**caractérisée en ce que** :
une paroi antérieure du boîtier comporte, sur son côté tourné vers le registre de chauffage (2) et au moins localement, une couche qui augmente l'absorption du rayonnement thermique, en particulier une peinture sombre, et/ou
une paroi postérieure du boîtier comporte, sur son côté tourné vers le registre de chauffage (2) et au moins localement, une couche qui augmente la réflexion du rayonnement thermique.

7. Installation de ventilation/chauffage selon l'une des revendications précédentes,
**caractérisée en ce que** :
il est prévu des organes écartement variables au moyen desquels, lorsque le registre de chauffage (2) présente une profondeur différente, une paroi antérieure du boîtier peut être fixée sur le reste de l'installation de ventilation/chauffage respectivement à faible distance vis-à-vis du registre de chauffage (2) ou en liaison thermoconductrice vis-à-vis du registre de chauffage (2), ladite distance étant comprise en particulier entre 0 et 15 mm, et s'élevant de préférence à environ 2 mm.

8. Installation de ventilation/chauffage selon l'une des revendications précédentes,
**caractérisée en ce que** :
la puissance de chauffage du registre de chauffage (2) peut être commandée ou régulée au moyen d'au moins un organe de commande et/ou de régulation, en particulier au moyen d'une vanne thermostatique (23), et/ou
le flux volumétrique dans le conduit d'amenée d'air frais (8) et/ou dans le conduit d'évacuation d'air du local (18) est réglable en modifiant de manière sélective la puissance du dispositif de ventilation respectif (14, 20), et/ou au moyen de clapets de ventilation sélectivement mobiles (15), et/ou **en ce qu'**il est prévu un capteur de température ambiante (21) interne ou externe, et/ou
il est prévu un capteur de température (13) dans la région du conduit d'amenée d'air frais (8) après l'échangeur de chaleur (7) dans la direction d'écoulement.

9. Installation de ventilation/chauffage selon l'une des revendications précédentes,
**caractérisée en ce que** :
la puissance de chauffage et/ou de ventilation peut être commandée ou régulée au moyen d'organes de commande et/ou de régulation (28) pour le fluide en écoulement, pour la puissance des dispositifs de ventilation et/ou la position des clapets de ventilation, en fonction de valeurs de consigne réglables, de la température ambiante, de la température de l'air admis échauffé dans l'échangeur de chaleur (7), de la température extérieure, de l'humidité de l'air du local, de l'humidité de l'air extérieur et/ou ou de la période diurne ou nocturne.

10. Installation de ventilation/chauffage selon l'une des revendications précédentes,
**caractérisée en ce que** :
l'air entrant ayant traversé l'échangeur de chaleur (7) peut être amené, via une commande de clapets de ventilation (15), directement au local à chauffer ou à ventiler (9), et/ou
une conduite de départ (5) prévue pour l'amenée du fluide vers le registre de chauffage (2), et une conduite de retour (6) prévue pour l'évacuation du fluide, sont prévues de manière à sortir hors de l'installation de ventilation/chauffage au niveau de sa face inférieure.

11. Installation de ventilation/chauffage selon l'une des revendications précédentes,
**caractérisée en ce que** :
il est prévu un filtre (12) à poussières fines et/ou à pollen dans la région du conduit d'amenée d'air frais (8) avant l'échangeur de chaleur (7) dans la direction d'écoulement, et/ou
il est prévu un filtre à air vicié (27) dans la région du conduit d'évacuation d'air du local (18) avant l'échangeur de chaleur (7) dans la direction d'écoulement.
